(19) Europäisches Patentamt / European Patent Office / Office européen des brevets

(11) **EP 2 821 975 A1**

(12) **EUROPEAN PATENT APPLICATION**

(43) Date of publication:
**07.01.2015 Bulletin 2015/02**

(51) Int Cl.:
**G07F 17/24** (2006.01)  **G07C 1/30** (2006.01)
**G06Q 30/02** (2012.01)

(21) Application number: **14174888.9**

(22) Date of filing: **30.06.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **01.07.2013 US 201313932575**

(71) Applicant: **Xerox Corporation**
**Rochester, New York 14644 (US)**

(72) Inventors:
• **Clinchant, Stephane**
**38000 Grenoble (FR)**
• **Sanchez, Eduardo Cardenas**
**Austin, TX 78747 (US)**
• **Dance, Christopher R.**
**38000 Grenoble (FR)**
• **Zoeter, Onno R.**
**38100 Grenoble (FR)**

(74) Representative: **Skone James, Robert Edmund**
**Gill Jennings & Every LLP**
**The Broadgate Tower**
**20 Primrose Street**
**London EC2A 2ES (GB)**

(54) **Method and apparatus for dynamic pricing for on street parking as a prediction task**

(57) A method, non-transitory computer readable medium, and apparatus for dynamic pricing of a parking space are disclosed. For example, the method determines (304) a fraction high fraction low (FHFL) based on one or more co-variates for a future time interval, determines (306) a rate change for the parking space based on the FHFL, applies (308) the rate change to a precalculated rate for the parking space for the future time interval to determine an updated rate and publishes (310) the updated rate.

FIG. 3

## Description

The present disclosure relates generally to setting a rate for a parking space and, more particularly, to a method and an apparatus for dynamic pricing of on street parking as a prediction task.

BACKGROUND

Parking spaces in many large metropolitan cities are a limited resource. Many street parking spaces are a valuable commodity in these large metropolitan cities because they are often free or much cheaper than parking in a parking garage.

However, much of the traffic in these large metropolitan areas can be attributed to drivers who are searching for a street parking spot. For example, they may double park waiting for a parking spot to open up or drive slowly looking for an available parking spot, thereby, impeding traffic.

As a result, adjusting the pricing of street parking may be helpful in removing unnecessary traffic in these large metropolitan cities. Currently, some cities deploy static pricing based on past historical data for street parking. In other words, data may be collected over a few months and the rate for parking may be set based upon the data that is collected. However, this method may not accurately rate the street parking if traffic patterns deviate significantly from the historical data that is collected.

SUMMARY

According to aspects illustrated herein, there are provided a method, a non-transitory computer readable medium, and an apparatus for pricing of a parking space. One disclosed feature of the embodiments is a method that determines a fraction high fraction low (FHFL) based on one or more co-variates for a future time interval, determines a rate change for the parking space based on the FHFL, applies the rate change to a pre-calculated rate for the parking space for the future time interval to determine an updated rate and publishes the updated rate.

Another disclosed feature of the embodiments is a non-transitory computer-readable medium having stored thereon a plurality of instructions, the plurality of instructions including instructions which, when executed by a processor, cause the processor to perform operations that determines a fraction high fraction low (FHFL) based on one or more co-variates for a future time interval, determines a rate change for the parking space based on the FHFL, applies the rate change to a pre-calculated rate for the parking space for the future time interval to determine an updated rate and publishes the updated rate.

Another disclosed feature of the embodiments is an apparatus comprising a processor and a computer readable medium storing a plurality of instructions which, when executed by the processor, cause the processor to perform operations that determine a fraction high fraction low (FHFL) based on one or more co-variates for a future time interval, determine a rate change for the parking space based on the FHFL, apply the rate change to a pre-calculated rate for the parking space for the future time interval to determine an updated rate and publish the updated rate.

The invention leads to a novel method and apparatus for controlling traffic flow utilizing the pricing of one or more parking spaces. This could be achieved in particular by utilizing the published, updated rate to control access to a parking space, for example by means of an access gate or the like. A person wishing to use a parking space would need to pay the updated, published rate for the space in order to obtain physical access to it.

BRIEF DESCRIPTION OF THE DRAWINGS

The teaching of the present disclosure can be readily understood by considering the following detailed description in conjunction with the accompanying drawings, in which:

> FIG. 1 illustrates a dynamic pricing system for a parking space of the present disclosure;
> FIG. 2 illustrates one example of a chart for determining a fraction high fraction low (FHFL);
> FIG. 3 illustrates an example flowchart of a method for dynamic pricing of a parking space; and
> FIG. 4 illustrates a high-level block diagram of a general-purpose computer suitable for use in performing the functions described herein.

To facilitate understanding, identical reference numerals have been used, where possible, to designate identical elements that are common to the figures.

DETAILED DESCRIPTION

The present disclosure broadly discloses a method and non-transitory computer readable medium for dynamic pricing of a parking space. As discussed above, parking spaces in many large metropolitan cities are a limited resource. Many street parking spaces are a valuable commodity in these large metropolitan cities because they are often free or much cheaper than parking in a parking garage. However, much of the traffic in these large metropolitan areas can be attributed to drivers who are searching for a street parking spot. For example, they may double park waiting for a parking spot to open up or drive slowly looking for an available parking spot, thereby, impeding traffic.

One embodiment of the present disclosure provides a method for dynamic pricing of a parking spot. For example, the method provides the ability to dynamically change rates for parking spots in real time based on predicted occupancy levels during a future time period in a parking space that a car will be parked. The rate can be adjusted ex-ante such that the driver may know the cost for parking in advance and decide whether or not to park based upon the adjusted rate.

In other words, the rate for parking is not set and not permanently fixed based only upon historical data. Rather, the pricing can change as circumstances (e.g., co-variates) change at a present time. In addition, the pricing change is based upon a predicted future occupancy rate and not only a current occupancy rate. For example, a car parking in a relatively unoccupied area may contribute to a high level of congestion and occupancy experienced during a future time period. Thus, the driver should not get a discount if the car will contribute to future congestion and high occupancy even though currently the parking spaces are underutilized or not congested. In other words, in one embodiment the dynamic pricing method of the present disclosure can take into consideration one or more co-variates at a present time to predict a future occupancy level to adjust a parking rate at the present time.

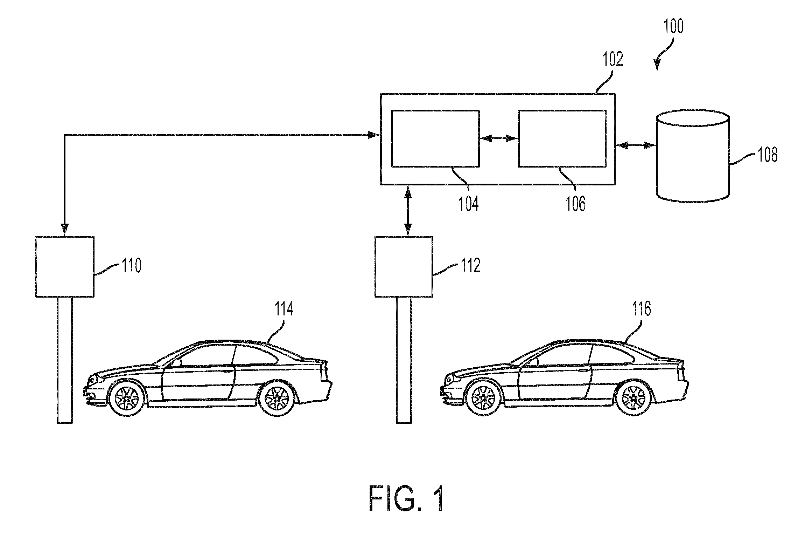

To better understand the present disclosure, FIG. 1 illustrates an example of a dynamic pricing system 100 for a parking space. In one embodiment, the system 100 may include a parking rate management system 102, a database 108 of historical occupancy data, one or more parking meters 110 and 112 and one or more cars 114 and 116.

In one embodiment, the parking rate management system 102 may include an occupancy feedback control unit 104 and a controller 106. In one embodiment, the controller 106 may be a proportional integral derivative (PID) controller. In one embodiment, the parking rate management system 102 may be in communication with the database 108. The database 108 may store historical occupancy data that can be used to determine a pre-calculated rate for a parking space based on historical data. However, the historical occupancy data may not adjust rates based upon current circumstances (e.g., co-variates) or predicted future occupancy fractions that may change based upon the current circumstances. Thus, the historical occupancy data in the database 108 may be used as a starting point for rates that may be adjusted up and down depending on the dynamic pricing method disclosed herein.

In one embodiment, the pre-calculated rate may be a blended rate. For example, during a first time period a first rate may be charged (e.g., $1/hour between 10:00 am and 12:00 PM) and a second time period a second rate may be charged (e.g., $2/hour between 12:00 PM and 4:00 PM). Thus, if a driver parks between 11:00 AM and 1:00 PM, the pre-calculated parking rate may be $3 (e.g., $1 for the time period between 11:00 AM and 12:00 PM and $2 for the time period between 12:00 PM and 1:00 PM).

In one embodiment, the pre-calculated rate may be a rate ladder. For example, the rate may be adjusted only a limited amount around the pre-calculated rate for each time period (e.g., if the pre-calculated rate is $1.00 between 10:00 AM and 12:00 PM, the rate can only change to $0.50 or $1.50). Whether the rate should be dynamically adjusted higher or lower for either the blended rate or the rate ladder may be determined by the methods described herein.

In one embodiment, the parking meters 110 and 112 may also be equipped with a processor and computer readable memory to perform the methods disclosed herein. In one embodiment, the parking rate management system 102 may be located remotely from the parking meters 110 and 112. As a result, the parking meters 110 and 112 may transmit information to the parking rate management system 102 to allow the parking rate management system 102 perform the methods disclosed herein.

For example, the parking meters 110 and 112 may be equipped with sensors (e.g., motion sensors, proximity sensors, image capturing sensors, cameras, IR sensors and the like) that can detect whether the parking space is occupied by a car 114 or 116. In one embodiment, the parking meters 110 and 112 may also be equipped with a communication module such that the parking meters 110 and 112 may transmit occupancy information to the parking rate management system 102 over a wired or wireless communication network (e.g., Wi-Fi, a wide area network, a local area network with a gateway, and the like).

Although FIG. 1 illustrates a particular number of parking meters 110 and 112, cars 114 and 116, a parking rate management system 102 and a database 108, it should be noted that any number (e.g., more or less) of one or more of these elements or devices may be deployed. In addition, FIG. 1 has been simplified for illustrative purposes. It should be noted that additional devices or network elements may be deployed such as network gateways, communication towers, border elements, one or more access networks, and the like.

As noted above, the parking rate management system 102 may dynamically adjust parking rates based upon one or more co-variates that determine an occupancy fraction during a future time period. In one embodiment, the parking spaces may be on-street parking. In another embodiment, the parking spaces may be parking spaces in a parking lot or a parking garage.

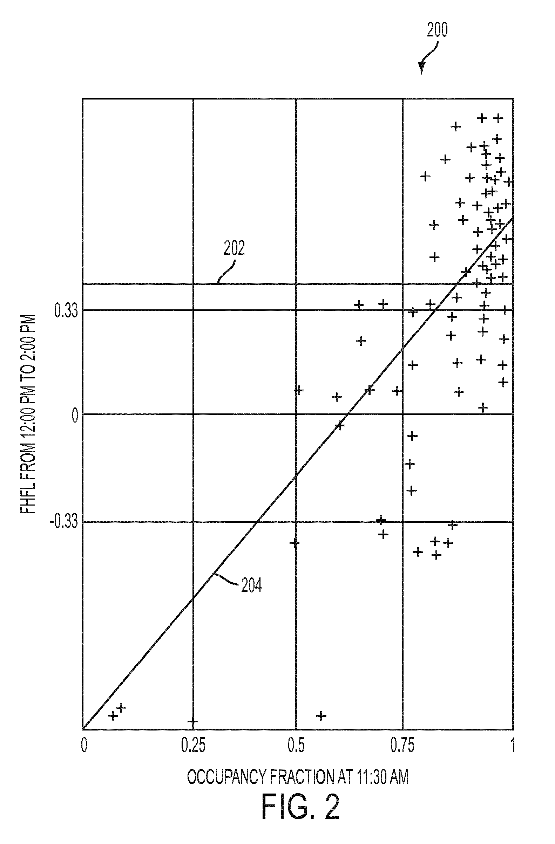

For example, in a simplest example where only a single co-variant (e.g., occupancy fraction) is used a chart 200 may be used to determine how to adjust a parking rate during a future time period. FIG. 2 illustrates an example chart 200 for determining a fraction high minus fraction low (FHFL) during a particular time period on a particular street versus a current occupancy fraction at a present time. The crosses may represent data points that are collected. A line 202 may represent an average and a line 204 may represent a least squares fit that can be used for estimation.

In one embodiment, an FHFL above 0.33 may mean rates should be increased. An FHFL below -0.33 may mean rates should be decreased and an FHFL between 0.33 and -0.33 may mean rates should not change. The FHFL threshold values of 0.33 and -0.33 are examples and the FHFL threshold values for increasing rates, decreasing rates or keep rates unchanged may be set to any desired value.

In one embodiment, the chart 200 may illustrate graphically the historical FHFL for a particular street at a particular time period given a particular occupancy fraction at a particular time. In one embodiment, multiple charts 200 may be created for all the various combinations of times and time periods throughout a day.

In one embodiment, FHFL is a measure of parking occupancy that determines if there is congestion or under utilization. FHFL may be a value that measures a high occupancy fraction for a given time period subtracted by a low occupancy fraction for the given time period. In one embodiment, given a historical dataset of occupancy data, for a particular geographical region of interest and a particular time-window in the week, the fraction of time that saw the region and time window congested may be referred to as fraction high (FH). The fraction of time that region and time window that was under-utilized can be called fraction low (FL).

In one embodiment, the region of interest may be, for example, a blockface, one side of a street between two side streets, and the like. In one embodiment, "congested" may be defined as if more than 90% of the available parking spaces are occupied or full. In one embodiment, underutilized can be defined as if less than 70% of the available parking spaces are occupied or full. A time-window of interest can be for instance all weekdays between 9:00 AM and 11:00 AM, all hours in the week during which parkers need to pay for parking, and the like. This data may be collected over several months to create the chart 200.

The chart 200 may be used as follows for the simplest case where only a single co-variant, e.g., occupancy fraction, is used. A car 116 may attempt to park in front of the parking meter 112 at 11:30 AM on street A and wishes to park during a future time period of 12:00 PM to 2:00 PM. In one embodiment, all of the parking meters may provide occupancy information to the occupancy feedback control unit 104. The occupancy feedback control unit 104 may determine that the current occupancy at 11:30 AM on street A is approximately 0.9.

Thus, if chart 200 is a chart for street A, the historical FHFL for the future time period between 12:00 PM to 2:00 PM predicts that the FHFL given a present occupancy fraction of 0.9 may be above 0.33. As a result, the chart 200 indicates that the rate should be increased from the pre-calculated rate.

In another example, if the current occupancy at 11:30 AM on street A were approximately 0.25, the chart 200 would predict that the FHFL would be below -0.33 for the future time period between 12:00 PM to 2:00 PM. Thus, the parking rate should be decreased from the pre-calculated rate.

The chart 200 provides an example of using only a single co-variant, e.g., a current occupancy fraction. However, the chart 200 may be modified to take into account any number of co-variates including, for example, an occupancy fraction of an adjacent street(s) or block(s), a time of day, a day of the week, a current weather condition, an occurrence of a current event occurring near the area or street, payment information, and the like. For example, if neighboring blocks are congested it is highly likely that the present street is also congested. Alternatively, if a sporting event is occurring the congestion level may be higher than the historical data that was collected would indicate when no sporting event is occurring. In another example, if the current weather is snowing or raining, the FHFL may be much lower than the historical data would indicate as less people may come outdoors due to the poor weather. Thus, the co-variates of a present circumstance may be used to predict a future occupancy level or FHFL to determine how parking rates should be adjusted.

In one embodiment, the future time period may be determined based upon a predicted length of stay. In another embodiment, the future time period may be determined based upon a time limit of a parking meter. For example, if the parking meter has a two hour time limit, the analysis may be performed on a two hour time period in the future. In another embodiment, the future time period may be determined based upon a length of time that is requested. For example, a driver may enter an amount of time that he or she would like to park for at the parking meter.

It should be noted that the above example is an example where the method is discretized. In other words, the above example method applies to discrete periods of time. In another example, the method may be performed continuously. In one embodiment, the continuous function for determining a parking rate ex-ante may be as follows:

$$\text{Eq. (1): } p^* = \text{argmax}_p E_{p(o[ta: ta + \delta] | ot0, p, D)} U(o_{ta:ta + \delta}, p),$$

wherein Ep represents the expectation function, wherein o[ta:ta + $\delta$] represents a sequence of occupancies from a time of application ta, and for a specific duration $\delta$, wherein ta represents the time of application, wherein ot0 represents an occupancy at a time zero, wherein p represents a rate, wherein D represents data associated with the one or more co-variates;

wherein U represents the utility function, wherein p* represents the updated rate for the future time interval and wherein argmax$_p$ represents maximizing the expectation function and the utility function for a rate p.

Thus, one embodiment of the present disclosure provides a method for dynamic parking rates based upon one or more co-variates and how the one or more co-variates will affect an occupancy fraction during a future time period. The amount of the change may be set based upon a particular project or application. In other words, the present method may simply determine whether the rates should be increased, kept the same or decreased without regard to how much the rates should be increased or decreased.

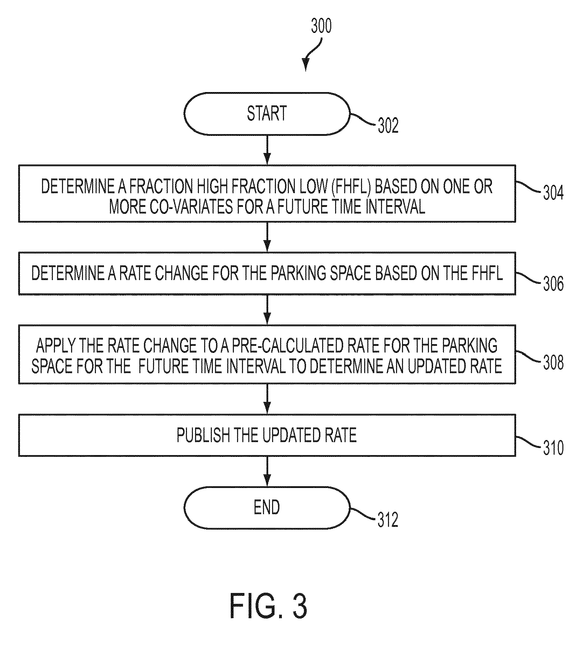

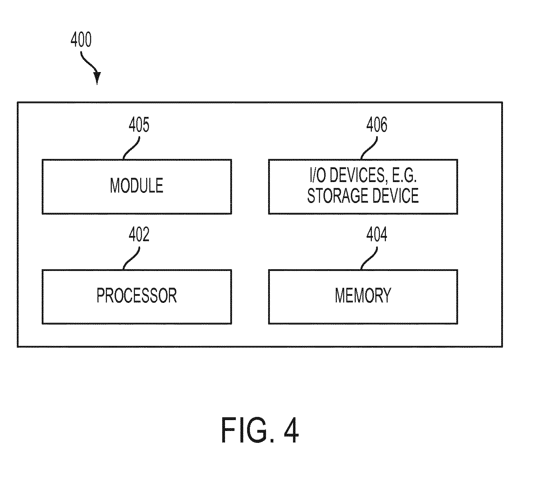

FIG. 3 illustrates a flowchart of a method 300 for dynamic pricing of a parking space. In one embodiment, one or more steps or operations of the method 300 may be performed by the parking rate management system 102, a parking meter 110 or 112 or a general-purpose computer as illustrated in FIG. 4 and discussed below.

The method 300 begins at step 302. At step 304, the method 300 determines a fraction high fraction low (FHFL) based on one or more co-variates for a future time interval. For example, a chart (or any other forms of data representation) of historical data of one or more co-variates at a present time versus the FHFL for a future time period may be used. In one embodiment, based upon the one or more co-variates the chart may be used to determine the FHFL for the future time interval.

In one embodiment, a chart similar to the chart 200 may be used. To illustrate, in a simplest scenario where only a single co-variant of current occupancy fraction is used, the chart may be the co-variant of current occupancy fraction versus FHFL. Thus, based upon a current occupancy fraction, a prediction of future congestion or occupancy level reflected by the FHFL may be determined for the future time period. For example, an FHFL above 0.33 may mean rates should be increased. An FHFL below -0.33 may mean rates should be decreased and an FHFL between 0.33 and -0.33 may mean rates should not change. The FHFL threshold values of 0.33 and -0.33 are examples and the FHFL threshold values for increasing rates, decreasing rates or keep rates unchanged may be set to any desired value.

As noted above, the one or more co-variates may include an occupancy fraction of an adjacent street(s) or block(s), a time of day, a day of the week, a current weather condition, a current event, payment information, and the like. For example, if neighboring blocks are congested it is highly likely that the present street is also congested. Alternatively, if a sporting event is occurring the congestion level may be higher than the historical data that was collected would indicate when no sporting event is occurring. In another example, if the current weather is snowing or raining, the FHFL may be much lower than the historical data would indicate as less people may come outdoors due to the poor weather. Thus, the co-variates of a present circumstance may be used to predict a future occupancy level or FHFL to determine how parking rates should be adjusted.

At step 306, the method 300 determines a rate change for the parking space based on the FHFL. For example, the FHFL may determine that the rate change should be increased if the FHFL is above a threshold, that the rate change should be decreased if the FHFL is below a threshold or that the rate change should be kept the same if the FHFL is between a range.

At step 308, the method 300 applies the rate change to a pre-calculated rate for the parking space for the future time interval to determine an updated rate. For example, historical occupancy data may be used to calculate a pre-calculated rate for the parking space. In one embodiment, the pre-calculated rate may be a blended rate or a rate ladder. Based upon the FHFL, the rate may be increased, decreased or remain the same. The amount of the change may be based on a particular project or application. For example, a city may determine that the maximum increase or decrease is $0.50 above or below a pre-calculated base rate.

At step 310, the method 300 publishes the updated rate. For example, the updated rate may be displayed on the parking meter such that a driver may pay ex-ante rather than ex-post (i.e., after the parking time period has expired). At step 312, the method 300 ends.

In one embodiment, the method 300 performs a method that is based upon a discretized algorithm. In other words, the method is applied on discrete time intervals. However, the method 300 may be adapted to be performed continuously. For example, rather than determining the FHFL based upon one or more co-variates, a mathematical function (e.g., Equation (1) described above) may be used to continuously determine a rate change based upon the one or more co-variates. Then the steps 306 - 310 may be performed.

It should be noted that although not explicitly specified, one or more steps, functions, or operations of the method 300 described above may include a storing, displaying and/or outputting step as required for a particular application. In other words, any data, records, fields, and/or intermediate results discussed in the methods can be stored, displayed, and/or outputted to another device as required for a particular application. Furthermore, steps, functions, or operations in FIG. 3 that recite a determining operation, or involve a decision, do not necessarily require that both branches of the determining operation be practiced. In other words, one of the branches of the determining operation can be deemed as an optional step.

FIG. 4 depicts a high-level block diagram of a general-purpose computer suitable for use in performing the functions described herein. As depicted in FIG. 4, the system 400 comprises a processor element 402 (e.g., a CPU), a memory 404, e.g., random access memory (RAM) and/or read only memory (ROM), a module 405 for providing dynamic pricing of a parking space, and various input/output devices 406 (e.g., storage devices, including but not limited to, a tape drive, a floppy drive, a hard disk drive or a compact disk drive, a receiver, a transmitter, a speaker, a display, a speech synthesizer, an output device (such as a graphic display, printer, and the like), an output port, and a user input device (such as a keyboard, a keypad, a mouse, and the like)).

It should be noted that the present disclosure can be implemented in software and/or in a combination of software and hardware, e.g., using application specific integrated circuits (ASIC), a general purpose computer or any other hardware equivalents, e.g., computer readable instructions pertaining to the method(s) discussed above can be used to configure a hardware processor to perform the steps of the above disclosed methods. In one embodiment, the present module or process 405 for providing dynamic pricing of a parking space can be loaded into memory 404 and executed by processor 402 to implement the functions as discussed above. As such, the present method 405 for dynamic pricing of a parking space (including associated data structures) of the present disclosure can be stored on a non-transitory (e.g., physical and tangible) computer readable storage medium, e.g., RAM memory, magnetic or optical drive or diskette and the like. For example, the hardware processor 402 can be programmed or configured with instructions (e.g., computer readable instructions) to perform the steps, functions, or operations of method 300.

## Claims

1. A method for pricing of a parking space, comprising:

   determining, by a processor, a fraction high minus fraction low (FHFL) value based on one or more co-variates for a future time interval;
   determining, by the processor, a rate change for the parking space based on the FHFL value;
   applying, by the processor, the rate change to a pre-calculated rate for the parking space for the future time interval to determine an updated rate; and
   publishing, by the processor, the updated rate.

2. The method of claim 1, wherein the one or more co-variates comprise at least one of: an occupancy fraction at a current time, an occupancy fraction of an adjacent street, a time of day, a day of week, an occurrence of a current event, a current weather condition or a payment information.

3. The method of claim 1 or claim 2, wherein the determining the FHFL value for a street during the future time interval is based on historical data.

4. The method of any of the preceding claims, wherein the future time interval comprises at least one of: a predicted length of stay, a time limit of a parking meter or a length of time that is requested.

5. The method of any of the preceding claims, wherein the rate change is an increase when the FHFL value is above a threshold.

6. The method of any of claims 1 to 4, wherein the rate change is a decrease when the FHFL value is below a threshold.

7. The method of any of the preceding claims, wherein the pre-calculated rate comprises a blended rate.

8. The method of any of claims 1 to 6, wherein the pre-calculated rate comprises a rate ladder.

9. A non-transitory computer-readable medium storing a plurality of instructions which, when executed by a processor, cause the processor to perform operations for pricing of a parking space, the operations comprising:

determining a fraction high minus fraction low (FHFL) value based on one or more co-variates for a future time interval;
determining a rate change for the parking space based on the FHFL value;
applying the rate change to a pre-calculated rate for the parking space for the future time interval to determine an updated rate; and
publishing the updated rate.

10. The non-transitory computer-readable medium of claim 9 storing a plurality of instructions which, when executed by a processor, cause the processor to perform a method according to any of claims 1 to 8.

11. A method for pricing of a parking space, comprising:

determining, by a processor, a rate change for the parking space based on a maximization of an expectation function and a utility function, wherein the expectation function is based on an expected future occupancy fraction based on one or more co-variates for a future time interval and the utility function is based on an expected under utilization;
applying, by the processor, the rate change to a pre-calculated rate for the parking space for the future time interval to determine an updated rate; and
publishing, by the processor, the updated rate.

12. The method of claim 11, wherein the maximization of the expectation function and the utility function comprises:

$$p^* = \mathrm{argmax}_p E_{p(o[ta:\, ta\, +\, \delta]\, |\, ot0,\, p,\, D)} U(o_{ta:ta\, +\, \delta},\, p),$$

wherein Ep represents the expectation function,
wherein ta represents the time of application,
wherein $\delta$ represents a length of a time window,
wherein o[ta:ta+$\delta$] represents a sequence of occupancies from the time of application for a specific length of time,
wherein ot0 represents an occupancy at a time zero,
wherein p represents a rate,
wherein D represents data associated with the one or more co-variates;
wherein U represents the utility function,
wherein p* represents the updated price for the future time interval and
wherein $\mathrm{argmax}_p$ represents maximizing the expectation function and the utility function for a price p.

13. The method of claim 11 or claim 12, wherein the one or more co-variates comprise at least one of: an occupancy fraction at a current time, an occupancy fraction of an adjacent street, a time of day, a day of week, an occurrence of a current event, a current weather condition or a payment information.

14. The method of any of claims 11 to 13, wherein the future time interval comprises at least one of: a predicted length of stay, a time limit of a parking meter or a length of time that is requested.

FIG. 1

FIG. 2

300

START ──302

DETERMINE A FRACTION HIGH FRACTION LOW (FHFL) BASED ON ONE OR MORE CO-VARIATES FOR A FUTURE TIME INTERVAL ──304

DETERMINE A RATE CHANGE FOR THE PARKING SPACE BASED ON THE FHFL ──306

APPLY THE RATE CHANGE TO A PRE-CALCULATED RATE FOR THE PARKING SPACE FOR THE FUTURE TIME INTERVAL TO DETERMINE AN UPDATED RATE ──308

PUBLISH THE UPDATED RATE ──310

END ──312

FIG. 3

400

| 405 | 406 |
|-----|-----|
| MODULE | I/O DEVICES, E.G. STORAGE DEVICE |
| 402 | 404 |
| PROCESSOR | MEMORY |

FIG. 4

**Europäisches Patentamt**
**European Patent Office**
**Office européen des brevets**

# EUROPEAN SEARCH REPORT

Application Number

EP 14 17 4888

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/285790 A1 (JONES GAVIN [AU] ET AL) 15 November 2012 (2012-11-15) * figures 1,7 * * paragraphs [0059] - [0061], [0097] - [0098] * ----- | 1-14 | INV. G07F17/24 G07C1/30 G06Q30/02 |
| A | US 2012/130872 A1 (BAUGHMAN AARON K [US] ET AL) 24 May 2012 (2012-05-24) * paragraph [0072] - paragraph [0084] * ----- | 1-14 | |

TECHNICAL FIELDS
SEARCHED          (IPC)

G06Q
G07C
G07F

The present search report has been drawn up for all claims

| Place of search | Date of completion of the search | Examiner |
|---|---|---|
| Munich | 22 October 2014 | Heselius, Per |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 14 17 4888

This annex lists the patent family members relating to the patent documents cited in the above-mentioned European search report.
The members are as contained in the European Patent Office EDP file on
The European Patent Office is in no way liable for these particulars which are merely given for the purpose of information.

22-10-2014

| Patent document cited in search report | | Publication date | Patent family member(s) | | Publication date |
|---|---|---|---|---|---|
| US 2012285790 | A1 | 15-11-2012 | CN | 103562969 A | 05-02-2014 |
| | | | CN | 103562976 A | 05-02-2014 |
| | | | US | 2012285790 A1 | 15-11-2012 |
| | | | US | 2012285791 A1 | 15-11-2012 |
| | | | US | 2012285792 A1 | 15-11-2012 |
| | | | US | 2012285793 A1 | 15-11-2012 |
| | | | US | 2012286036 A1 | 15-11-2012 |
| | | | US | 2012286968 A1 | 15-11-2012 |
| | | | US | 2014108107 A1 | 17-04-2014 |
| | | | WO | 2012154902 A1 | 15-11-2012 |
| | | | WO | 2012154913 A2 | 15-11-2012 |
| US 2012130872 | A1 | 24-05-2012 | US | 2012130872 A1 | 24-05-2012 |
| | | | US | 2012310712 A1 | 06-12-2012 |

EPO FORM P0459

For more details about this annex : see Official Journal of the European Patent Office, No. 12/82